Europäisches Patentamt

European Patent Office

Office européen des brevets

(19)

(11) Veröffentlichungsnummer : **0 466 958 B1**

(12) # EUROPÄISCHE PATENTSCHRIFT

(45) Veröffentlichungstag der Patentschrift :
**03.06.92 Patentblatt 92/23**

(51) Int. Cl.$^5$ : **C09C 1/30,** G03G 9/097,
C07F 7/18

(21) Anmeldenummer : **90113839.6**

(22) Anmeldetag : **19.07.90**

(54) Oberflächenmodifizierte Siliciumdioxide.

(43) Veröffentlichungstag der Anmeldung :
**22.01.92 Patentblatt 92/04**

(45) Bekanntmachung des Hinweises auf die
Patenterteilung :
**03.06.92 Patentblatt 92/23**

(84) Benannte Vertragsstaaten :
**AT BE CH DE DK ES FR GB GR IT LI LU NL SE**

(56) Entgegenhaltungen :
EP-A- 0 326 862
DE-A- 2 511 187
FR-A- 1 456 810
PATENT ABSTRACTS OF JAPAN, Band 9, Nr.
239 (P-391)[1962], 25. September 1985; & JP-A-60 93 455 (FUJI XEROX) 25-05-1985
IDEM
PATENT ABSTRACTS OF JAPAN, Band 13, Nr.
129 (P-849)[3477], 30. März 1989; & JP-A-63 300 241 (RICOH) 07-12-1988

(56) Entgegenhaltungen :
PATENT ABSTRACTS OF JAPAN, Band 13, Nr.
241 (C-604)[3589], 6. Juni 1989; & JP-A-01 51 477 (KOKAI) 27-02-1989
PATENT ABSTRACTS OF JAPAN, Band 14, Nr.
253 (P-1054)[4196], 30. Mai 1990; & JP-A-2 66 564 (MINOLTA CAMERA) 06-03-1990
IDEM

(73) Patentinhaber : **Degussa Aktiengesellschaft
Weissfrauenstrasse 9
W-6000 Frankfurt am Main 1 (DE)**

(72) Erfinder : **Deusser, Hans, Dr.
Stifterstrasse, 14
W-8757 Karlstein 1 (DE)**
Erfinder : **Göbel, Thomas, Dr.
Birkenweg 1
W-6450 Hanau 9 (DE)**
Erfinder : **Meyer, Jürgen, Dr.
Hans-Böckler Strasse 4
W-8751 Stockstadt (DE)**
Erfinder : **Günther, Michael, Dr.
Stifterstrasse 16
W-8757 Karlstein (DE)**
Erfinder : **Stübbe, Andreas
Mühlstrasse 3
W-6458 Rodenbach (DE)**

EP 0 466 958 B1

**Beschreibung**

Die Erfindung betrifft oberflächenmodifizierte, auf pyrogenem Wege hergestellte Siliciumdioxide, ihre Herstellung und Verwendung in Tonern.

Es ist bekannt, beim elektrostatischen Entwicklungsverfahren pulverförmige Toner einzusetzen, die oberflächenmodifiziertes, auf pyrogenem Wege hergestelltes Siliciumdioxid enthalten. Zur Oberflächenmodifizierung werden verschiedene Silane, vorallem Dimethyldichlorsilan eingesetzt (US-PS 3 720 617, EP-A 0 293 009).

Gegenstand der Erfindung ist ein oberflächenmodifiziertes, auf pyrogenem Wege hergestelltes Siliciumdioxid, <u>dadurch gekennzeichnet</u>, daß die Modifizierung mit der chemischen Verbindung

$$CHF_2\text{-}CF_2\text{-}O\text{-}(CH_2)_3\ Si(OCH_3)_3$$

durchgeführt wurde und das modifizierte Siliciumdioxid die folgenden physiklaisch-chemischen Kenndaten aufweist:

| Aussehen | lockeres weißes Pulver | |
|---|---|---|
| Oberfläche nach[1] BET | 170 | ± 30 |
| Mittlere Größe der Primärteilchen nm | 12 | |
| Stampfdichte[2] | 60 | ± 20 |
| Trocknungsverlust[3] 2 h bei 105 °C | < 2 | |
| Glühverlust [2] [6] | 6,5 | ± 2,0 |
| C-Gehalt | 2,4 | ± 0,5 |
| pH-Wert [5] (in 4 %iger Disperion) | 3,5 - 5,5 | |

```
1  nach DIN 66 131
2  nach DIN ISO 787/XI, JIS K 5101/18
3  nach DIN ISO 787/II, ASTM D 280, JIS K 5101/21
4  nach DIN 55921, ASTM D 1208, JIS K 5101/23
5  nach DIN ISO 787/IX, ASTM D 1208, JIS K 5101/24
6  bezogen auf die 2 Stunden bei 105 °C getrocknete
   Substanz
```

Ein weiterer Gegenstand der Erfindung ist ein oberflächenmodifiziertes, auf pyrogenem Wege hergestelltes Siliciumdioxid, <u>dadurch gekennzeichnet</u>, daß die Modifizierung mit der chemischen Verbindung

$$CF_3\text{-}CHF\text{-}CF_2\text{-}O\text{-}(CH_2)_3\text{-}Si(OCH_3)_3$$

durchgeführt wurde und das modifizierte Siliciumdioxid die folgenden physikalisch-chemischen Kenndaten aufweist:

| Aussehen | lockeres weißes Pulver |
|---|---|
| Oberfläche nach [1] BET | 170 ± 30 |
| Mittlere Größe der Primärteilchen nm | 12 |
| Stampfdichte[2] | 60 ± 20 |
| Trocknungsverlust[3] 2 h bei 105 °C % | < 2 |
| Glühverlust [2] [6] | 7,0 ± 2,0 |
| C-Gehalt | 2,2 ± 0,5 |
| pH-Wert [5] (in 4 %iger Dispersion) | 3,5 - 5,5 |

. . .

[1] nach DIN 66 131

[2] nach DIN ISO 787/XI, JIS K 5101/18

[3] nach DIN ISO 787/II, ASTM D 280, JIS K 5101/21

[4] nach DIN 55921, ASTM D 1208, JIS K 5101/23

[5] nach DIN ISO 787/IX, ASTM D 1208, JIS K 5101/24

[6] bezogen auf die 2 Stunden bei 105 °C getrocknete Substanz

Ein weiterer Gegenstand der Erfindung ist ein oberflächenmodifiziertes, auf pyrogenem Wege hergestelltes Siliciumdioxid, dadurch gekennzeichnet, daß die Modifizierung mit der chemischen Verbindung

$$C_4F_9\text{-}CH_2\text{-}CH_2\text{-}Si(OCH_3)_3$$

durchgeführt wurde und das modifizierte Siliciumdioxid die folgenden physikalisch-chemischen Kenndaten aufweist:

Aussehen                                    lockeres weißes Pulver

Oberfläche nach[1] BET                              170      ± 30

Mittlere Größe der
Primärteilchen nm                                    12

Stampfdichte[2]                                      60      ± 20

Trocknungsverlust[3]
2 h bei 105 °C  %                                    < 2

Glühverlust [2] [6]                                  7,5     ± 2,0

C-Gehalt                                             2,2     ± 0,5

pH-Wert [5]
(in 4 %iger Dispersion)                              3,5   -  5,5

[1] nach DIN 66 131
[2] nach DIN ISO 787/XI, JIS K 5101/18
[3] nach DIN ISO 787/II, ASTM D 280, JIS K 5101/21
[4] nach DIN 55921, ASTM D 1208, JIS K 5101/23
[5] nach DIN ISO 787/IX, ASTM D 1208, JIS K 5101/24
[6] bezogen auf die 2 Stunden bei 105 °C getrocknete
    Substanz

Ein weiterer Gegenstand der Erfindung ist ein oberflächenmodifiziertes, auf pyrogenem Wege hergestelltes Siliciumdioxid, <u>dadurch gekennzeichnet</u>, daß die Modifizierung mit der chemischen Verbindung

$$C_6F_{13}-CH_2-CH_2-Si(OCH_3)_3$$

durchgeführt wurde und das modifizierte Siliciumdioxid die folgenden physikalisch-chemischen Kenndaten aufweist:

Aussehen                                lockeres weißes Pulver

Oberfläche nach [1] BET                                   170 ± 30

Mittlere Größe der
Primärteilchen nm                                         12

Stampfdichte[2]                                           60 ± 20

Trocknungsverlust[3]
2 h bei 105 °C    %                                       < 2

Glühverlust [2] [6]                                       8,5 ± 2

C-Gehalt                                                  2,0 ± 0,5

pH-Wert [5]
(in 4 %iger Dispersion)                                   3,5 - 5,5

                                                              . . .

[1] nach DIN 66 131
[2] nach DIN ISO 787/XI, JIS K 5101/18
[3] nach DIN ISO 787/II, ASTM D 280, JIS K 5101/21
[4] nach DIN 55921, ASTM D 1208, JIS K 5101/23
[5] nach DIN ISO 787/IX, ASTM D 1208, JIS K 5101/24
[6] bezogen auf die 2 Stunden bei 105 °C getrocknete
    Substanz

Ein weiterer Gegenstand der Erfindung ist ein Verfahren zur Herstellung der oberflächenmodifizierten, auf pyrogenem Wege hergestellten Siliciumdioxide, dadurch gekennzeichnet, daß man eine auf pyrogenem Wege hergestellte Kieselsäure mit den physikalisch-chemischen Kenndaten:

5

| | | |
|---|---|---|
| Oberfläche nach BET | $m^2/g$ | $200 \pm 25$ |
| Mittlere Größe der Primärteilchen | Nanometer | 12 |
| Stampfdichte[1] | g/l | ca. 50 |
| Trocknungsverlust[2] (2 h bei 105 °C) | % | < 1,5 |
| Glühverlust[2][7] (2 h bei 1000 °C) | % | < 1 |
| pH-Wert[3] (in 4 %iger wäßriger Dispersion) | | 3,6 - 4,3 |
| $SiO_2$[5] | % | > 99,8 |
| $Al_2O_3$[5] | % | < 0,05 |
| $Fe_2O_3$[5] | % | < 0,003 |
| $TiO_2$[5] | % | < 0,03 |
| $HCl$[5][6] | % | < 0,025 |
| Siebrückstand[4] nach Mocker (45 µm) | % | < 0,05 |

[1] nach DIN 53 194

[2] nach DIN 55 921

[3] nach DIN 53 200

[4] nach DIN 53 580

[5] bezogen auf die 2 Stunden bei 1000°C geglühte Substanz

[6] HCl-Gehalt ist Bestandteil des Glühverlustes

[7] bezogen auf die 2 Stunden bei 105°C getrocknete Substanz

in einer bekannten Mischvorrichtung vorlegt, mit einer chemischen Verbindung aus der Gruppe der Silane

$$CHF_2\text{-}CF_2\text{-}O\text{-}(CH_2)_3\text{-}Si(OCH_3)_3$$
$$CF_3\text{-}CHF\text{-}CF_2\text{-}O\text{-}(CH_2)_3\text{-}Si(OCH_3)_3$$
$$C_4F_9\text{-}CH_2\text{-}CH_2\text{-}Si(OCH_3)_3$$
$$C_6F_{13}\text{-}CH_2\text{-}CH_2\text{-}Si(OCH_3)_3$$

unter intensivem Vermischen besprüht, nachmischt und das erhaltene Gemisch während einer Zeit von 1,5 bis 2,5 Stunden bei einer Temperatur von 100 bis 140 °C tempert.

Die auf pyrogenem Wege hergestellte Kieselsäure Aerosil 200 wird beschrieben in:

Ullmanns Enzyklopädie der technischen Chemie 4. Auflage (1982) S. 464 - 469 sowie Tabelle 12.

Die Silane

$$CHF_2\text{-}CF_2\text{-}O\text{-}(CH_2)_3\text{-}Si(OCH_3)_3$$
$$CF_3\text{-}CHF\text{-}CF_2\text{-}O\text{-}(CH_2)_3\text{-}Si(OCH_3)_3$$

$$C_4F_9\text{-}CH_2\text{-}CH_2\text{-}Si(OCH_3)_3$$
$$C_6F_{13}\text{-}CH_2\text{-}CH_2\text{-}Si(OCH_3)_3$$

werden hergestellt, indem man Trichlorsilan mit je einer Verbindung aus der Gruppe

$$C_4F_9\text{-}CH = CH_2$$
$$C_6F_{13}\text{-}CH = CH_2$$
$$C_2F_4H - O - CH_2 - CH = CH_2$$
$$C_3F_6H - O - CH_2 - CH = CH_2$$

umsetzt.

Dabei wird das Olefin in iso-Propanol-Lösung in Gegenwart von $H_2 Pt Cl_6$ vorgelegt und auf Rückflußtemperatur aufgeheizt. Das Trichlorsilan wird stufenweise der Lösung zugesetzt, wobei die Rückflußtemperatur von 40 °C auf 90 bis 95 °C ansteigt.

Die Veresterung mit Methanol bzw. Natriummethylat ist nach zwei Stunden bei Temperaturen von 65 bis 75 °C beendet. Die Aufarbeitung erfolgt nach bekannten Methoden.

Das beschriebene Verfahren ist zum Teil bekannt aus der DE-OS 31 38 235 und DE-OS 25 11 187.

Die erfindungsgemäß oberflächenmodifizierten auf pyrogenem Wege hergestellten Kieselsäuren können pulverförmigen Tonern zugesetzt werden, die bei dem elektrostatischen Entwicklungsverfahren (Photokopieren) eingesetzt werden.

Die erfindungsgemäßen oberflächenmodifizierten, auf pyrogenem Wege hergestellten Kieselsäuren weisen die folgenden Vorteile auf:

Zum einen sind die Ladungsstabilitäten bei dem Einsatz der Tonern beim elektrostatischen Entwicklungsverfahren besser und zum anderen sind die Aktivierungsenergien niedriger.

Beispiel

Die im folgenden eingesetzte pyrogen hergestellte Kieselsäure Aerosil 200 weist die folgenden physikalisch-chemischen Kenndaten auf:

| Oberfläche nach BET | $m^2/g$ | 200 ± 25 |
| --- | --- | --- |
| Mittlere Größe der Primärteilchen | Nanometer | 12 |
| Stampfdichte[1] | $g/l$ | ca. 50 |
| Trocknungsverlust[2] (2 h bei 105 °C) | % | < 1,5 |
| Glühverlust[2][7] (2 h bei 1000 °C) | % | < 1 |
| pH-Wert[3] (in 4 %iger wäßriger Dispersion) | | 3,6 - 4,3 |
| $SiO_2$[5] | % | > 99,8 |
| $Al_2O_3$[5] | % | < 0,05 |
| $Fe_2O_3$[5] | % | < 0,003 |
| $TiO_2$[5] | % | < 0,03 |
| $HCl$[5][6] | % | < 0,025 |
| Siebrückstand[4] nach Mocker (45 μm) | % | < 0,05 |

[1] nach DIN 53 194

[2] nach DIN 55 921

[3] nach DIN 53 200

[4] nach DIN 53 580

[5] bezogen auf die 2 Stunden bei 1000°C geglühte Substanz

[6] HCl-Gehalt ist Bestandteil des Glühverlustes

[7] bezogen auf die 2 Stunden bei 105°C getrocknete Substanz

Als Silane werden die Verbindungen eingesetzt:

1. $CHF_2\text{-}CF_2\text{-}O\text{-}(CH_2)_3\text{-}Si(OCH_3)_3$

2. $CF_3\text{-}CHF\text{-}CF_2\text{-}O\text{-}(CH_2)_3\text{-}Si(OCH_3)_3$

3. $C_4F_9\text{-}CH_2\text{-}CH_2\text{-}Si(OCH_3)_3$

4. $C_6F_{13}\text{-}CH_2\text{-}CH_2\text{-}Si(OCH_3)_3$

In einem 135 l-Lödige-Mischer werden 2 kg Aerosil 200 vorgelegt. 200 g Silan werden mit einer Zerstäuberdüse bei laufendem Mischer auf das Aerosil aufgesprüht. Anschließend wird noch 15 min. nachgemischt. Das silanisierte Aerosil wird 2 h bei 120 °C getempert.

Die erhaltenen oberflächenmodifizierten Kieselsäuren weisen die folgenden physikalisch-chemischen Kenndaten auf:

|  | 1 | 2 | 3 | 4 |
|---|---|---|---|---|
| Aussehen | lockeres weißes Pulver | | | |
| Oberfläche nach[1] BET | 175 | 171 | 178 | 174 |
| Mittlere Größe der Primärteilchen nm | 12 | 12 | 12 | 12 |
| Stampfdichte[2] | 58 | 59 | 63 | 61 |
| Trocknungsverlust[3] 2 h bei 105 °C    % | 0,3 | 0,45 | 0,70 | 0,83 |
| Glühverlust [2] [6] | 6.67 | 7.04 | 7.46 | 8.62 |
| C-Gehalt | 2.4 | 2.2 | 2.2 | 2.0 |
| pH-Wert[5] (in 4 %iger Dispersion) | 4.76 | 4.56 | 4.77 | 4.67 |

[1] nach DIN 66 131
[2] nach DIN ISO 787/XI, JIS K 5101/18
[3] nach DIN ISO 787/II, ASTM D 280, JIS K 5101/21
[4] nach DIN 55921, ASTM D 1208, JIS K 5101/23
[5] nach DIN ISO 787/IX, ASTM D 1208, JIS K 5101/24
[6] bezogen auf die 2 Stunden bei 105 °C getrocknete Substanz

Anwendungstechnische Prüfung
Beeinflußung des Fließverhaltens eines Tonerpulvers durch Kieselsäurezusatz
Das Fließverhalten wurde durch Messung der Schüttkegelhöhe und Bestimmung des Auslaufverhaltens beurteilt.
Der Rohtoner besteht dabei aus 93 % Tonerharz OT 5201 und 7 % Pigmentruß Printex 150 T.
Das Tonerharz OT 5201 weist die folgenden technischen Produkteigenschaften auf:

| | | |
|---|---|---|
| Melt Flow Index [1]) (150 °C/2,16 kp) | g/10 min | 5 - 10 |
| Viskositätszahl [2]) | $cm^3/g$ | 37 - 43 |
| Gewichtsverlust [3]) | Gew.-% | < 1 |
| Rest-Monomere [4]) | Gew.-% | < 0,35 |
| Styrol | | < 0,25 |
| n-BMA | | < 0,10 |

| | |
|---|---|
| Monomerzusammensetzung | 70 Gew.-% Styrol |
| | 30 Gew.-% n-Butylmethacrylat |

| | |
|---|---|
| Glasübergangstemperatur Tg [5]) | 60 - 65 °C |

| | |
|---|---|
| Mittlerer Korndurchmesser [6]) | (d 50 % RS) 0,200 - 0,314 mm |

[1]) DIN 53 735, Ausg. 2/88
Probenvorbehandlung: Trocknung bei 50 °C
Ölpumpenvacuum, 1 Stunde oder 4 Stunden
Trockenschrank, 50 °C

[2]) DIN 7745, Ausg. 1/80

[3]) IR-Trocknungsgerät, bis zur Gewichtskonstanz

[4]) Gaschromatographie

[5]) DSC-Methode, ASTM D 3418/75

[6]) DIN 53 734, Ausg. 1/73, Auswertung gemäß
DIN 66 141, Ausg. 2/74

Der Ruß Printex 150 T ist ein im Handel erhältlicher Ruß und weist die folgenden physikalisch-chemischen Kenndaten auf:

PRINTEX $^R$ 150 T

Nigrometer-Index                                     83

Farbstärke
DIN 53 204/53 234
(IRB 3 = 100)                            100

Öl Absorption, F.P.         [%]          400

DPB Absorption
DIN 53 601                [ml/100 g]     115

Glühverlust                 [%]          7

pH-Wert DIN 53 200                        5

Siebrückstand
DIN 53 580               [% max.]      0,05

Aschegehalt                           0,05

Stampfdichte
DIN 53 194               [g/l fluffy]    150

mittlere Teilchengröße      [nm]        29

BET-Oberfläche             [m$^2$/g]      110

|  | Schüttkegelhöhe [mm] | Auslaufverhalten [Note*] |
|---|---|---|
| Rohtoner | 47,6 | 4 |
| Rohtoner + Kieselsäure 1 + 0,3 % | 46,5 | 3 |
| Rohtoner + Kieselsäure 2 + 0,3 % | 45,4 | 3 |
| Rohtoner + Kieselsäure 3 + 0,3 % | 47,5 | 3 |
| Rohtoner + Kieselsäure 4 + 0,3 % | 45,0 | 3 |

* Schriftenreihe Pigmente, Heft 31, Seite 7

q/m-Messungen

In der Praxis unterliegt ein Toner sehr unregelmäßigen Bedingungen. Er wird durch Ein- und Ausschalten des Kopiergerätes, nach längeren Standzeiten, in denen keine Kopien gemacht werden, und während des Kopierens ständig neu aktiviert bzw. aufgeladen.

Unter diesen Praxisbedingungen muß das Ladungsniveau (ausgedrückt im q/m-Wert) stabil sein. Zur Untersuchung der Eigenschaften der Versuchskieselsäuren 1, 2, 3 und 4 wurden deshalb die sogenannte Ladungsretentionszeit und die Mehrfachaktivierung untersucht.

q/m-Meßprinzip

Nach dieser Methode wird das Ladungs/Masse-Verhältnis (auch Tribo genannt) elektrostatisch aufladbarer Pulver, insbesondere Toner für Zweikomponentenentwickler, bestimmt. Dabei wird ein Toner/Carrier-Gemisch (Entwickler) in einer Glasflasche auf einem Rollbock eine bestimmte Zeit aktiviert. Der Entwickler wird anschließend in eine Meßzelle, deren Potential Null ist, gegeben. Durch wahlweise Druck/Unterdruck wird der Toner von dem Carrier getrennt und durch ein Sieb abgesaugt bzw. abgeblasen. Es handelt sich um die "Hard" bzw. "Soft-Blow-Off" Methode.

Die Ladung des abgesaugten oder abgeblasenen Toners wird als Spannungsdifferenz angezeigt und nach

$$q/m = \frac{10\,U}{m}\ (\mu C/g)$$

berechnet, wobei
m die abgeblasene (-gesaugte) Masse ist. Der Toner ist dem Vorzeichen der Spannungsdifferenz entgegengesetzt aufgeladen.

Meßbedingungen

Ansatz:        2 % Toner

98 % Carrier (sphärisches Ferrit, 80 - 100 μm)

Aktivierung:    Rollbock, 360 UpM in 40 ml Glasflasche, Einwaage 40 g Entwickler

Mehrfachaktivierung

Hierbei wurde eine Probe mehrmals hintereinander aktiviert. Dieser Fall entspricht eher den Praxisbedingungen, da der Entwickler in einem Kopiergerät in mehr oder weniger regelmäßigen Abständen aufgeladen wird.

Ladungsretentionszeit

Hier wurde die Probe 30 Minuten aktiviert und nach den in der Grafik angegebenen Zeiten gemessen. Das Ergebnis zeigt, wie stabil eine einmal aufgebrachte Ladung über einen längeren Zeitraum beibehalten wird.
Dabei wurde folgende Formulierung verwendet:
– Rohtoner
93 % Tonerharz OT 5201
7 % Pigmentruß Printex 150 T
– beschichteter Toner
jeweils 0,3 % Aerosil gemäß den Beispielen 1, 2, 3 und 4 wurde dem Rohtoner zugesetzt
Die Kieselsäure AEROSIL R 972 ist Stand der Technik gemäß US-PS 3,720,617

Mehrfachaktivierung

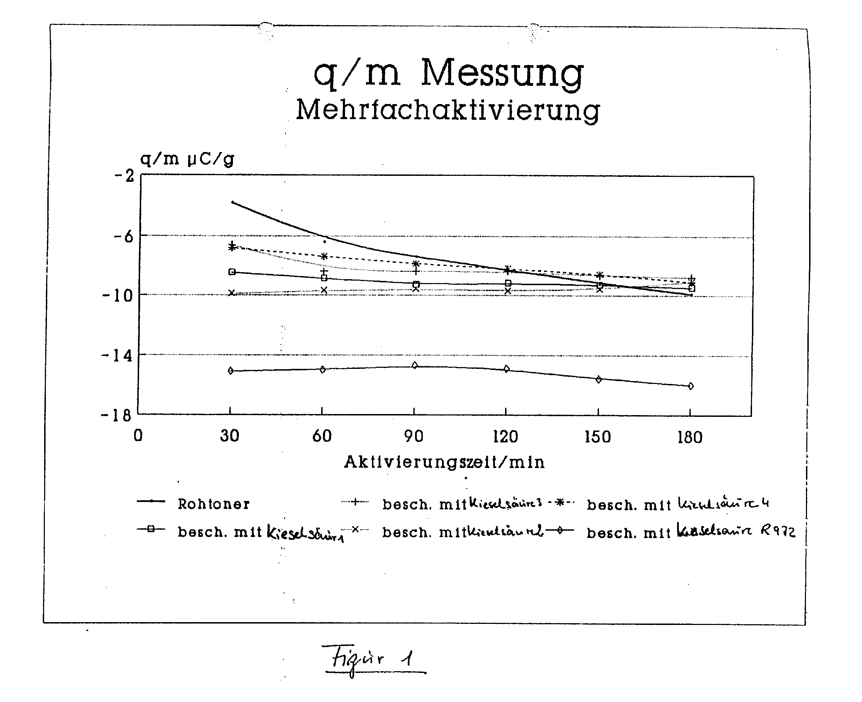

Im Gegensatz zum Rohtoner zeigen alle beschichteten Toner ein deutlich stabileres Ladungsniveau. Bei Beschichtung mit der Kieselsäure 1 oder 2 wird schon nach einmaliger Aktivierung der Endwert nicht mehr wesentlich beeinflußt. Durch Verwendung von Kieselsäure 3 wird die Ladungsstabilität im Vergleich zum Rohtoner verbessert, der q/m-Wert steigt aber im Verlauf der Meßreihe kontinuierlich. Der mit Kieselsäure 4 beschichtete Toner zeigt nach der 2. Aktivierung ein stabiles Ladungsniveau. Die Ergebnisse dieser Messung sind in der Figur 1 dargestellt.

Ladungsretentionszeit

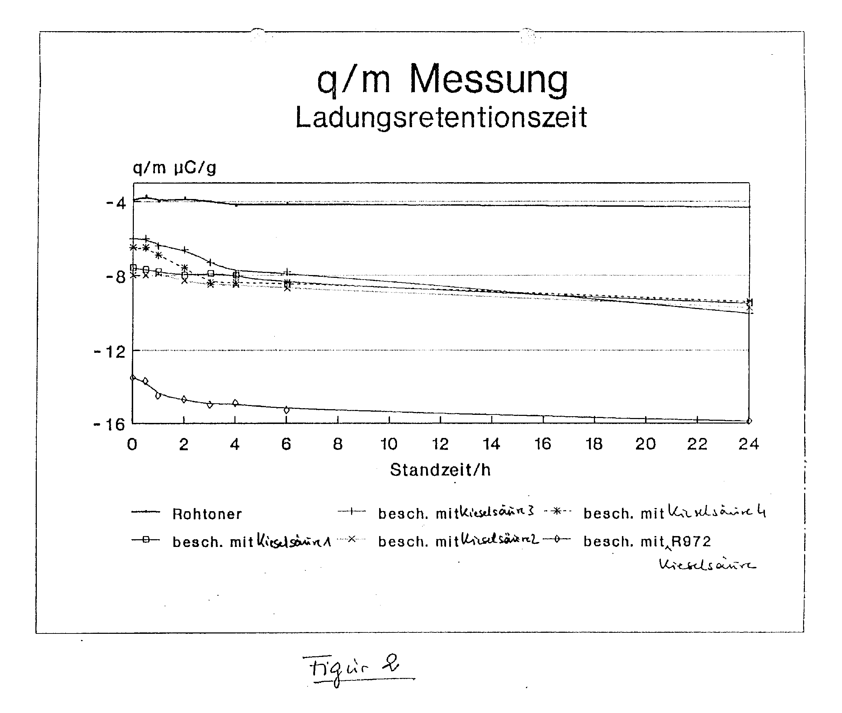

Der Rohtoner behält zwar die einmal aufgebrachte Ladung (Aktivierungszeit bei allen Typen 30 min.) auch noch nach 24 h stabil bei, erreicht aber bei weitem nicht den bei der Mehrfachaktivierung gefundenen Endwert. Im Unterschied zum Rohtoner haben die beschichteten Toner den Vorteil, daß mit zunehmender Standzeit die Ladung den jeweils in der Mehrfachaktivierung gefundenen Endwert erreichen. Dieser Vorteil macht sich in der Praxis dadurch bemerkbar, daß unabhängig von der Vorgeschichte des Toners, die elektrostatische Ladung auch nach sehr langen Standzeiten des Toners das Niveau der in der Mehrfachaktivierung gefundenen Werte beibehält. Am stabilsten ist bei der Ladungsretentszeit auch der mit den Kieselsäuren 1 und 2 beschichtete Toner. Die Ergebnisse dieser Messung sind in der Figur 2 dargestellt.
Zusammenfassend ergeben sich durch den Einsatz der erfindungsgemäßen Kieselsäuren folgende Vorteile:
– unter den beschriebenen Praxisbedingungen wird die Ladungsstabilität handelsüblicher Zweikomponenten-Trockentoner deutlich verbessert
– auch nach längeren Lagerzeiten bzw. Stillstandszeiten von Kopiergeräten wird die in der Mehrfachaktivierung erzielte maximale elektrostatische Aufladung erreicht bzw. beibehalten
– die mit den erfindungsgemäßen Kieselsäuren beschichteten Toner weisen eine geringe Aktivierungsenergie (Aktivierungsenergie = Energie die benötigt wird, um maximal q/m-Wert zu erreichen) auf
– die Fließfähigkeit handelsüblicher Zweikomponenten Trockentoner wird durch die Beschichtung mit den Kieselsäuren 1 - 4 deutlich verbessert.

Vergleich zum Stand der Technik gemäß US-PS 3,720,617

In dem Patent US-PS 3,720,617 wird der Einsatz der Kieselsäure Aerosil R 972 in Pulvertonern beschrieben. In den Figuren 1 + 2 wird neben dem Rohtoner und den erfindungsgemäßen Kieselsäuren Aerosil R 972 aufgeführt.
Im Vergleich der erfindungsgemäßen Kieselsäuren zu Aerosil R 972 wird deutlich, daß Aerosil R 972 eine bedeutend höhere elektrostatische Aufladung bewirkt. Neben sogenannten primären und sekundären Harzen besteht eine handelsübliche Tonerforumlierung aus Pigmentruß und einem Ladungssteuerstoff in der Harzmatrix. Das Ladungsniveau wird in erster Linie durch das Tonerharz und dem Ladungssteuerstoff bestimmt. Die Ladungseigenschaften wie Ladungsstabilität, Ladungsretention, Aktivierungsenergie und die Pulvereigenschaften werden von der Kieselsäure bestimmt beziehungsweise optimiert.

Die erfindungsgemäßen Kieselsäuren sind eine Verbesserung der Technik, da sie das Ladungsniveau des Rohtoners weniger stark oder kaum beeinflussen, die Ladungsstabilität, Aktivierungsenergie und Ladungsretention sehr positiv beeinflussen. Dies ist auch deshalb vorteilhaft, weil es in der Kopiermaschine immer zu mehr oder weniger starken Entmischungen kommt, wodurch die Konzentration der Kieselsäure im Langzeittest gewissen Schwankungen unterliegt. Durch den Einsatz der erfindungsgemäßen Kieselsäuren sind diese Schwankungen weniger problematisch, da der Einfluß auf das Ladungsniveau geringer ist.

Die erfindungsgemäß hergestellten mit flourhaltigen Silanen umgesetzten Siliciumdioxide werden negativ aufgeladen, wenn sie mit magnetischen Pulver, wie z. B. Eisenpulver oder Eisenoxidpulver in Kontakt kommen oder miteinander verrührt werden. Dieser Gesichtspunkt macht die erfindungsgemäßen Siliciumdioxide nicht nur zur Verbesserung der Fließfähigkeit sondern ebenso auch als Ladungserzeuger für die negative Aufladung der Tonerpartikel besonders geeignet. Die erfindungsgemäßen Kieselsäuren können in Bezug auf die Tonermenge in einer Menge von 0,1 bis 5 Gew.-% eingesetzt werden.

Die erfindungegemäßen Siliciumdioxide können entweder als freifließendes Pulver zu den Entwicklerpartikelchen hinzugegeben werden, wobei sie auf der Oberfläche der Entwicklerpartikel haften, wie es in der Zeitschrift POWDER Technologie 59 (1989), Seite 45 bis 52 beschrieben wird, oder sie werden in den Matrix der Tonerpartikel hineingegeben, wenn diese zur Homogenisierung geschmolzen und anschließend gemahlen werden.

Die Tonerpartikel, die mit den erfindungsgemäßen Kieselsäuren vermischt werden können, sind bekannt (EP-A 0 293 009, US-PS 3,720,617).

Herstellung des Toners

90 Teile von ATLAC T 500 (Handelsname der Atlas Chemical Industries Corporation, Wilmington, USA) bestehend aus propoxyliertem Bisphenol-A-fumaratpolyester mit einem Glas-transition-Temperatur von 51 °C, einem Schmelzpunkt in dem Bereich von 65 bis 85 °C, eine Säurezahl von 13,9 und einer Viskosität, gemessen bei 25 °C in einer Mischung von Phenol-Orthodichlorbenzol (Gewichtsverhältnis 60/40) von 0,175, 10 Teile von Ruß Cabot Regal 400 (Handelsname der Cabot Corporation, USA) werden in einen Kneter eingefügt und auf 120 °C erhitzt, bis sich eine Schmelze bildet. Danach wird mit dem Kneten begonnen. Nach ungefähr 30 Minuten, wurde das Kneten angehalten und die Mischung auf Raumtemperatur (20 °C) abgekühlt.

Bei dieser Temperatur wurde die Mischung zerbrochen und gemahlen, bis ein Pulver entstand, welches weiterhin mit einer Luftstrahlmühle verkleinert wurde. Weiterhin wurde eine Windsichtung durchgeführt, wobei eine Kombination der Aparate AFG (Alpine Fließbettgegenstrahlmühle) Typ 100 als Mühle ausgestattet mit einem ATP (Alpine Turboplexwindsichter Typ 500 GS) als Windsichter eingesetzt wurden. Eine weitere Windsichtung wurde erreicht, indem man den Alpinen Multiplexlabor-Zickzacksichter angewandt hat. Die Teilchengrößenverteilung des zu erhaltenen Toners wurde mit bekannten Mitteln, wie zum Beispiel Coulter Counter bestimmt.

Die mittlere Teilchengrößendurchmesser war 5 μm. Die behaltenen Tonerpartikel wurden in eine Mischapparatur eingeführt und mit dem erfindungsgemäßen Siliciumdioxiden vermischt. Gleichzeitig wurden in separaten Proben zur Herstellung von Vergleichsmustern bekannte hydrophobierte Kieselsäuren eingemischt. Im einzelenen wurden die folgenden Kieselsäuren verwendet:

| Beispiel-Nr. | Hydrophobierungs-mittel | BET-Oberfläche |
|---|---|---|
| ex 1 (Vergleich) | √-aminopropyl-Si trimethyl-Si | 150 $m^2$/g |
| ex 2 (Vergleich) | dimethyl-Si | 110 $m^2$/g |
| ex 3 (Vergleich) | trimethyl-Si | 200 $m^2$/g |
| ex 4 (erfindungsgemäß) | $C_4F_9(CH_2)_2Si$ | 180 $m_2$/g |

Die Kieselsäuren wurden auf die folgende Art und Weise mit den Tonernpartikeln vermischt:

100 g Toner und 105 g Siliciumdioxidadditive wurden in eine Janke und Kundel Labormühle Typ IKA M 20, die eine Geschwindigkeit von 20.000 Umdrehungen pro Minute hat hinzugegeben. Dabei wurde eine gleichmäßige Temperatur von 20 °C eingehalten.

Die Mischzeit betrug 15 Sekunden.

Durch den Zusatz der Kieselsäuren wurde bei dem Toner die Fließfähigkeit deutlich verbessert. Die erhaltene Mischung bestehend aus Toner und hydrophobierten Siliciumdioxid wird weiterhin eingesetzt zur Herstellung einer Entwicklermischung für einen zwei Komponenten elektrostatischen Prozeß. Nach dem Zusatz dieser Toner-Siliciumdioxidmischung zu einer gewöhnlichen Zinknickelferritträgermischung (nahzu 100 μm groß) in einem Bereich von 5 Gew.-% mit Bezug auf den Träger, wurde der Entwickler durch Rollen in einer Metalldose, die einen Durchmesser von 6 cm hat, aktiviert. Die Umdrehungszahl betrug 300 U/min während eines Zeitraums von 30 Minuten. Der Füllgrat der Rolle betrug 30 %.

Die Entwicklermischung, die auf dieser Art und Weise hergestellt wurde, wurde weiter untersucht. Die triboelektrische Ladung des Toners wurde bestimmt durch ein bekanntes Blow-off-Verfahren. Die Ergebnisse werden ausgedrückt in dem Verhältniss Ladung pro Masse: q/M. Die genaue Beschreibung dieser Methode ist in der europäischen Patentanmeldung Nr. 89 200 766.7 beschrieben.

Die experimentell ermittelten Ergebnisse der Bestimmung der triboelektrischen Ladung ergeben das folgende Bild:

| Beispiel | Triboelektrische Ladung |
|---|---|
| ex 1 | - 1 μC/g |
| ex 2 | - 14 μC/g |
| ex 3 | - 13 μC/g |
| ex 4 | - 18 μC/g |

Beispiele 5 bis 6

Ein farbloser Toner hergestellt auf ähnlichem Wege wie oben beschrieben wurde. Als einzige Ausnahme dazu wurde kein Ruß eingesetzt.

Die hydrophobierten Kieselsäuren der Beispiele 3 und 4 wurden in einer Menge von 2,5 g zu 100 g farblosen Toner zugesetzt. Die Entwickler wurden hergestellt durch die Hinzufügung der Toneradditivmischung zu den Carrier, wie er in dem Beispiel 1 bis 4 beschrieben wurde. Die Menge betrug 4 Gew.-%.

Kein brauchbarer Entwickler konnte erhalten werden, wenn man die Kieselsäure gemäß Beispiel 3 hinzugegeben hatte. Das Verhältnis von Ladung zur Masse war zu niedrig und eine staubige Mischung zeigt Entmischungserscheinungen.

Im Gegensatz dazu zeigt der Entwickler, der die erfindungsgemäß beschichtete Kieselsäure gemäß Beispiel 4 aufwies, einen triborelektrischen Wert von - 17 μC/g und zeigte gute Ergebnisse, wenn er als elektrophotographischer Entwickler verwendet wurde.

**Patentansprüche**

1. Oberflächenmodifiziertes, auf pyrogenem Wege hergestelltes Siliciumdioxid, <u>dadurch gekennzeichnet</u>, daß die Modifizierung mit der chemischen Verbindung

$$CHF_2-CF_2-O-(CH_2)_3-Si(OCH_3)_3$$

durchgeführt wurde und das modifizierte Siliciumdioxid die folgenden physikalisch-chemischen Kenndaten aufweist:

```
Aussehen                       lockeres weißes Pulver

Oberfläche nach[1] BET         170      ± 30

Mittlere Größe der
Primärteilchen nm              12

Stampfdichte[2]                60       ± 20

Trocknungsverlust[3]
2 h bei 105 °C                 < 2

Glühverlust [2] [6]            6,5    ±   2,0

C-Gehalt                       2,4    ±   0,5

pH-Wert [5]
(in 4 %iger Disperion)         3,5    ±   5,5


[1] nach DIN 66 131
[2] nach DIN ISO 787/XI, JIS K 5101/18
[3] nach DIN ISO 787/II, ASTM D 280, JIS K 5101/21
[4] nach DIN 55921, ASTM D 1208, JIS K 5101/23
[5] nach DIN ISO 787/IX, ASTM D 1208, JIS K 5101/24
[6] bezogen auf die 2 Stunden bei 105 °C getrocknete
    Substanz
```

2. Oberflächenmodifiziertes, auf pyrogenem Wege hergestelltes Siliciumdioxid, <u>dadurch gekennzeichnet</u>, daß die Modifizierung mit der chemischen Verbindung

$$CF_3-CHF-CF_2-O-(CH_2)_3-Si(OCH_3)_3$$

durchgeführt wurde und das modifizierte Siliciumdioxid die folgenden physikalisch-chemischen Kenndaten aufweist:

| Aussehen | lockeres weißes Pulver | |
|---|---|---|
| Oberfläche nach [1] BET | 170 | ± 30 |
| Mittlere Größe der Primärteilchen nm | 12 | |
| Stampfdichte[2] | 60 | ± 20 |
| Trocknungsverlust[3] 2 h bei 105 °C % | < 2 | |
| Glühverlust [2] [6] | 7,0 ± | 2,0 |
| C-Gehalt | 2,2 ± | 0,5 |
| pH-Wert [5] (in 4 %iger Dispersion) | 3,5 - 5,5 | |

[1] nach DIN 66 131
[2] nach DIN ISO 787/XI, JIS K 5101/18
[3] nach DIN ISO 787/II, ASTM D 280, JIS K 5101/21
[4] nach DIN 55921, ASTM D 1208, JIS K 5101/23
[5] nach DIN ISO 787/IX, ASTM D 1208, JIS K 5101/24
[6] bezogen auf die 2 Stunden bei 105 °C getrocknete Substanz

3. Oberflächenmodifiziertes, auf pyrogenem Wege hergestelltes Siliciumdioxid, <u>dadurch gekennzeichnet</u>, daß die Modifizierung mit der chemischen Verbindung

$$C_4F_9\text{-}CH_2\text{-}CH_2\text{-}Si(OCH_3)_3$$

durchgeführt wurde und das modifizierte Siliciumdioxid die folgenden physikalisch-chemischen Kenndaten aufweist:

Aussehen                          lockeres weißes Pulver

Oberfläche nach[1] BET                      170        ± 30

Mittlere Größe der
Primärteilchen nm                            12

Stampfdichte[2]                              60        ± 20

Trocknungsverlust[3]
2 h bei 105 °C   %                          < 2

Glühverlust [2] [6]                         7,5       ±   2

C-Gehalt                                     2,2       ± 0,5

pH-Wert [5]
(in 4 %iger Dispersion)                     3,5   -  5,5


[1] nach DIN 66 131
[2] nach DIN ISO 787/XI, JIS K 5101/18
[3] nach DIN ISO 787/II, ASTM D 280, JIS K 5101/21
[4] nach DIN 55921, ASTM D 1208, JIS K 5101/23
[5] nach DIN ISO 787/IX, ASTM D 1208, JIS K 5101/24
[6] bezogen auf die 2 Stunden bei 105 °C getrocknete
    Substanz

4. Oberflächenmodifiziertes, auf pyrogenem Wege hergestelltes Siliciumdioxid, dadurch gekennzeichnet, daß die Modifizierung mit der chemischen Verbindung

$$C_6F_{13}\text{-}CH_2\text{-}CH_2\text{-}Si(OCH_3)_3$$

durchgeführt wurde und das modifizierte Siliciumdioxid die folgenden physikalisch-chemischen Kenndaten aufweist:

EP 0 466 958 B1

| Aussehen | lockeres weißes Pulver |
|---|---|
| Oberfläche nach [1] BET | 170 ± 30 |
| Mittlere Größe der Primärteilchen nm | 12 |
| Stampfdichte[2] | 60 ± 20 |
| Trocknungsverlust[3] 2 h bei 105 °C % | < 2 |
| Glühverlust [2] [6] | 8,5 ± 2 |
| C-Gehalt | 2,0 ± 0,5 |
| pH-Wert [5] (in 4 %iger Dispersion) | 3,5 - 5,5 |

[1] nach DIN 66 131
[2] nach DIN ISO 787/XI, JIS K 5101/18
[3] nach DIN ISO 787/II, ASTM D 280, JIS K 5101/21
[4] nach DIN 55921, ASTM D 1208, JIS K 5101/23
[5] nach DIN ISO 787/IX, ASTM D 1208, JIS K 5101/24
[6] bezogen auf die 2 Stunden bei 105 °C getrocknete Substanz

5. Verfahren zur Herstellung der oberflächenmodifizierten, auf pyrogenem Wege hergestellten Siliciumdioxide, nach den Ansprüchen 1, 2, 3 oder 4, dadurch gekennzeichnet, daß man eine auf pyrogenem Wege hergestellte Kieselsäure mit den physikalisch-chemischen Kenndaten:

| Oberfläche nach BET | m$^2$/g | 200 ± 25 |
| Mittlere Größe der Primärteilchen | Nanometer | 12 |
| Stampfdichte[1] | g/l | ca. 50 |
| Trocknungsverlust[2] (2 h bei 105 °C) | % | < 1,5 |
| Glühverlust[2][7] (2 h bei 1000 °C) | % | < 1 |
| pH-Wert[3] (in 4 %iger wäßriger Dispersion) | | 3,6 - 4,3 |
| SiO$_2$[5] | % | > 99,8 |
| Al$_2$O$_3$[5] | % | < 0,05 |
| Fe$_2$O$_3$[5] | % | < 0,003 |
| TiO$_2$[5] | % | < 0,03 |
| HCl[5][6] | % | < 0,025 |
| Siebrückstand[4] nach Mocker (45 μm) | % | < 0,05 |

[1]) nach DIN 53 194

[2]) nach DIN 55 921

[3]) nach DIN 53 200

[4]) nach DIN 53 580

[5]) bezogen auf die 2 Stunden bei 1000°C geglühte Substanz

[6]) HCl-Gehalt ist Bestandteil des Glühverlustes

[7]) bezogen auf die 2 Stunden bei 105°C getrocknete Substanz

in einer bekannten Mischvorrichtung vorlegt, mit einer chemischen Verbindung aus der Gruppe der Silane

$$CHF_2\text{-}CF_2\text{-}O\text{-}(CH_2)_3\text{-}Si(OCH_3)_3$$
$$CF_3\text{-}CHF\text{-}CF_2\text{-}O\text{-}(CH_2)_3\text{-}Si(OCH_3)_3$$
$$C_4F_9\text{-}CH_2\text{-}CH_2\text{-}Si(OCH_3)_3$$
$$C_6F_{13}\text{-}CH_2\text{-}CH_2\text{-}Si(OCH_3)_3$$

unter intensivem Vermischen besprüht, nachmischt und das erhaltene Gemisch während einer Zeit von 1,5 bis 2,5 Stunden bei einer Temperatur von 100 bis 140 °C tempert.

## Claims

1. Surface modified pyrogenically produced silicon dioxide, characterised in that the modification was carried out with the chemical compound

$$CHF_2\text{-}CF_2\text{-}O\text{-}(CH_2)_3\text{-}Si(OCH_3)_3$$

and the modified silicon dioxide has the following physico-chemical characteristic data:

```
Appearance                              loose white powder

Surface area according to¹ BET          170        ± 30

Average size of primary
particles nm                            12

Tamped density²                         60         ± 20

Loss on drying³
2 h at 105°C                            < 2

Loss on annealing ² ⁶                   6.5        ± 2.0

Carbon content                          2.4        ± 0.5

pH value ⁵
(in 4 % dispersion)                     3.5        ± 5.5
```

```
¹ according to DIN 66 131
² according to DIN ISO 787/XI, JIS K 5101/18
³ according to DIN ISO 787/II, ASTM D 280, JIS K 5101/21
⁴ according to DIN 55921, ASTM D 1208, JIS K 5101/23
⁵ according to DIN ISO 787/IX, ASTM D 1208, JIS K 5101/24
⁶ based on the substance dried for 2 hours at 105°C
```

2. Surface modified, pyrogenically produced silicon dioxide, characterised in that the modification was carried out with the chemical compound

$$CF_3\text{-}CHF\text{-}CF_2\text{-}O\text{-}(CH_2)_3\text{-}Si(OCH_3)_3$$

and the modified silicon dioxide has the following physico-chemical characteristic data:

21

| | |
|---|---|
| Appearance | loose white powder |
| Surface according to [1] BET | 170 ± 30 |
| Average size of primary particles nm | 12 |
| Tamped density[2] | 60 ± 20 |
| Loss on drying[3] 2 h at 105°C % | < 2 |
| Loss on annealing [2] [6] | 7.0 ± 2.0 |
| Carbon content | 2.2 ± 0.5 |
| pH-value[5] (in 4% dispersion) | 3.5 - 5.5 |

[1] according to DIN 66 131
[2] according to DIN ISO 787/XI, JIS K 5101/18
[3] according to DIN ISO 787/II, ASTM D 280, JIS K 5101/21
[4] according to DIN 55921, ASTM D 1208, JIS K 5101/23
[5] according to DIN ISO 787/IX, ASTM D 1208, JIS K 5101/24
[6] based on the substance dried for 2 hours at 105°C

3. Surface modified, pyrogenically produced silicon dioxide, characterised in that the modification was carried out with the chemical compound

$$C_4F_9\text{-}CH_2\text{-}CH_2\text{-}Si(OCH_3)_3$$

and the modified silicon dioxide has the following physico-chemical characteristic data:

| Appearance | loose white powder |
|---|---|
| Surface according to[1] BET | 170 ± 30 |
| Average size of primary particles nm | 12 |
| Tamped density[2] | 60 ± 20 |
| Loss on drying[3] 2 h at 105°C % | < 2 |
| Loss on annealing 2 6 | 7.5 ± 2 |
| Carbon content | 2.2 ± 0.5 |
| pH-value[5] (in 4% dispersion) | 3.5 - 5.5 |

[1] according to DIN 66 131
[2] according to DIN ISO 787/XI, JIS K 5101/18
[3] according to DIN ISO 787/II, ASTM D 280, JIS K 5101/21
[4] according to DIN 55921, ASTM D 1208, JIS K 5101/23
[5] according to DIN ISO 787/IX, ASTM D 1208, JIS K 5101/24
6 based on the substance dried for 2 hours at 105°C

4. Surface modified, pyrogenically produced silicon dioxide, characterised in that the modification was carried out with the chemical compound

$$C_6F_{13}\text{-}CH_2\text{-}CH_2\text{-}Si(OCH_3)_3$$

and the modified silicon dioxide has the following physico-chemical characteristic data:

| Appearance | loose white powder |
|---|---|
| Surface according to [1] BET | 170 ± 30 |
| Average size of primary particles nm | 12 |
| Tamped density[2] | 60 ± 20 |
| Loss on drying[3] 2 h at 105°C % | < 2 |
| Loss on annealing [2] [6] | 8.5 ± 2 |
| Carbon content | 2.0 ± 0.5 |
| pH value [5] (in 4% dispersion) | 3.5 - 5.5 |

[1] according to DIN 66 131
[2] according to DIN ISO 787/XI, JIS K 5101/18
[3] according to DIN ISO 787/II, ASTM D 280, JIS K 5101/21
[4] according to DIN 55921, ASTM D 1208, JIS K 5101/23
[5] according to DIN ISO 787/IX, ASTM D 1208, JIS K 5101/24
[6] based on the substance dried for 2 hours at 105°C

5. A process for the preparation of the surface modified, pyrogenically produced silicon dioxides according to Clains 1, 2, 3 or 4, characterised in that a pyrogenically produced silica having the following physico-chemical characteristic data:

| | | | |
|---|---|---|---|
| Surface area according to BET | m$^2$/g | 200 ± 25 | |
| Average size of primary particles | Nanometers | 12 | |
| Tamped density[1] | g/l | about 50 | |
| Loss on drying[2] (2 h at 105°C) | % | < 1.5 | |
| Loss on annealing[2] [7] (2 h at 1000°C) | % | < 1 | |
| pH value [3] (in 4% aqueous dispersion) | | 3.6-4.3 | |
| $SiO_2$[5] | % | > 99.8 | |
| $Al_2O_3$[5] | % | < 0.05 | |
| $Fe_2O_3$[5] | % | < 0.003 | |
| $TiO_2$[5] | % | < 0.03 | |
| $HCl$[5] [6] | % | < 0.025 | |
| Sieve residue[4] according to Mocker (45 μm) | % | < 0.05 | |

[1] according to DIN 53 194

[2] according to DIN 55 921

[3] according to DIN 53 200

[4] according to DIN 53 580

[5] based on the substance annealed for 2 hours at 1000°C

[6] HCl content is part of the loss on annealing

[7] based on the substance dried for 2 hours at 105°C

is introduced into a known mixing apparatus, sprayed with a chemical compound selected from the following silanes:

$$CHF_2\text{-}CF_2\text{-}O\text{-}(CH_2)_3\text{-}Si(OCH_3)_3$$
$$CF_3\text{-}CHF\text{-}CF_2\text{-}O\text{-}(CH_2)_3\text{-}Si(OCH_3)_3$$
$$C_4F_9CH_2\text{-}CH_2\text{-}Si(OCH_3)_3$$
$$C_6F_{13}\text{-}CH_2\text{-}CH_2\text{-}Si(OCH_3)_3$$

with intensive mixing and after-mixed and the mixture obtained is tempered for a period of from 1.5 to 2.5 hours at a temperature of from 100 to 140°C.

**Revendications**

1. Dioxyde de silicium, modifié en surface, produit par voie pyrogénée, caractérisé en ce que la modification est opérée par le composé chimique :

$$CHF_2\text{-}CF_2\text{-}O\text{-}(CH_2)_3Si(OCH_3)_3$$
et l'oxyde de silicium modifié a les caractéristiques physico-chimiques suivantes :

| | |
|---|---|
| Aspect | Poudre blanche lâche |
| Surface selon BET[1] | 170 ± 30 |
| Taille moyenne des particules primaires nm | 12 |
| Densité apparente après damage[2] | 60 ± 20 |
| Perte au séchage[3] 2 heures à 105°C % | < 2 |
| Perte par calcination[2][6] | 6,5 ± 2,0 |
| Teneur en C | 2,4 ± 0,5 |
| Valeur de pH[5] (dans une dispersion à 4 %) | 3,5 - 5,5 |

[1] Selon DIN 66131

[2] Selon DIN ISO 787/XI, JIS K 5101/18

[3] Selon DIN ISO 787/II, ASTM D 280, JIS K 5101/21

[4] Selon DIN 55921, ASTM D 1208, JIS K 5101/23

[5] Selon DIN ISO 787/IX, ASTM D 1208, JIS K 5101/24

[6] rapporté à la substance séchée 2 heures à 105°C.

2. Dioxyde de silicium, modifié en surface, produit par voie pyrogénée, caractérisé en ce que la modification est exécutée avec le composé chimique :

$$CF_3\text{-}CHF\text{-}CF_2\text{-}O\text{-}(CH_2)_3\text{-}Si(OCH_3)_3$$
et le dioxyde de silicium modifié a les caractéristiques physico-chimiques suivantes :

```
Aspect                              Poudre blanche lâche

Surface selon BET⁽¹⁾                      170 ± 30

Taille moyenne des
particules primaires nm                        12

Densité apparente après damage⁽²⁾  60 ± 20

Perte au séchage⁽³⁾
2 heures à 105°C %                           < 2

Perte par calcination⁽²⁾⁽⁶⁾          6,5 ± 2,0

Teneur en C                          2,2 ± 0,5

Valeur de pH⁽⁵⁾                       3,5 - 5,5
(en dispersion à 4 %)


(1) Selon DIN 66131
(2) Selon DIN ISO 787/XI, JIS K 5101/18
(3) Selon DIN ISO 787/II, ASTM D 280, JIS K 5101/21
(4) Selon DIN 55921, ASTM D 1208, JIS K 5101/23
(5) Selon DIN  ISO 878/IX, ASTM D 1208, JIS K 5101/24
(6) rapporté à la substance séchée 2 heures à 105°C.
```

3. Dioxyde de silicium modifié en surface, produit par voie pyrogénée, caractérisé en ce que la modification est réalisée avec le composé chimique :

$$C_4F_9 - CH_2 - CH_2 - Si(OH_3)_3$$

et le dioxyde de silicium modifié a les caractéristiques physico-chimiques suivantes :

| Aspect | Poudre blanche lâche |
|---|---|
| Surface selon BET[1] | 170 ± 30 |
| Taille moyenne des particules primaires nm | 12 |
| Densité apparente après damage[2] | 60 ± 20 |
| Perte au séchage[3] 2 heures à 105°C % | < 2 |
| Perte par calcination[2][6] | 7,5 ± 2,0 |
| Teneur en C | 2,2 ± 0,5 |
| Valeur de pH (dans dispersion à 4 %) | 3,5 – 5,5 |

[1] Selon DIN 66131

[2] Selon DIN ISO 787/XI, JIS K 5101/18

[3] Selon DIN ISO 787/II, ASTM D 280, JIS K 5101/21

[4] Selon DIN 55921, ASTM D 1208, JIS K 5101/23

[5] Selon DIN ISO 878/IX, ASTM D 1208, JIS K 5101/24

[6] rapporté à la substance séchée 2 heures à 105°C.

4. Dioxyde de silicium modifié en surface, produit par voie pyrogénée, caractérisé en ce que la modification est réalisée avec le composé chimique :

$$C_6F_{13}\text{-}CH_2\text{-}CH_2\text{-}Si(OCH_3)_3$$

et le dioxyde de silicium modifié a les caractéristiques physico-chimiques suivantes :

```
Aspect                                Poudre blanche lâche

Surface selon BET(1)                       170 ±   30

Taille moyenne des
particules primaires nm                            12

Densité apparente après damage(2) 60 ±   20

Perte au séchage
2 heures à 105°C %                         <    2

Perte par calcination(2)(6)          8,5 ±    2

Teneur en C                          2,0 ± 0,5

Valeur de pH
(dans dispersion à 4 %)              3,5 ± 5,5


(1) Selon DIN 66131
(2) Selon DIN ISO 787/XI, JIS K 5101/18
(3) Selon DIN ISO 787/II, ASTM D 280, JIS K 5101/21
(4) Selon DIN 55921, ASTM D 1208, JIS K 5101/23
(5) Selon DIN  ISO 878/IX, ASTM D 1208, JIS K 5101/24
(6) rapporté à la substance séchée 2 heures à 105°C.
```

5. Procédé de préparation des dioxydes de silicium modifiés en surface, produits par voie pyrogénée, selon les revendications 1, 2, 3 ou 4, caractérisé en ce que l'on obtient dans un mélangeur connu une silice produite par voie pyrogénée ayant les caractéristiques physico-chimiques suivantes :

Surface selon BET m$^2$/g         200 ± 25

Taille moyenne des particules
primaires nanomètre          12

Densité apparente après damage[1] g/l environ 50

Perte par séchage[2] %
(2 heures à 105°C)         < 1,5

Perte par calcination[2][7] %
(2 heures à 1000°C)         < 1

Valeur du pH[3]
(en dispersion aqueuse à 4 %)    3,6 - 4,3

$SiO_2$[5] %         > 99,8

$Al_2O_3$[5] %         < 0,05

$Fe_2O_3$[5] %         < 0,003

$TiO_2$[5] %         < 0,03

HCL[5][6] %         < 0,025

Refus au tamis[4] %
selon Mocker (45 μm)         < 0,05

(1) Selon DIN 53194
(2) Selon DIN 55921
(3) Selon DIN 53200
(4) Selon DIN 53580
(5) rapporté à la substance calcinée pendant 2 heures
     à 1000°C
(6) le contenu de HCl est un composant de la perte par
     calcination
(7) rapporté à la substance séchée pendant 2 heures à
     105°C.

avec un composé chimique du groupe des silanes

$CHF_2\text{-}CF_2\text{-}O\text{-}(CH_2)_3\text{-}Si(OCH_3)_3$

$CF_3\text{-}CHF\text{-}CF_2\text{-}O\text{-}(CH_2)_3\text{-}Si(OCH_3)_3$

$C_4F_9\text{-}CH_2\text{-}CH_2\text{-}Si(OCH_3)_3$

$C_6F_{13}\text{-}CH_2\text{-}CH_2\text{-}Si(OCH_3)_3$

aspergé en mélangeant intensivement, mélangé ensuite à nouveau et on étuve le mélange obtenu pendant une durée de 1,5 à 2,5 heures à une température de 100 à 140°C.

# q/m Messung
## Mehrfachaktivierung

q/m µC/g

Aktivierungszeit/min

—— Rohtoner · · ·+· · · besch. mit Kieselsäure 3 · · *· · besch. mit Kieselsäure 4

· ·□· · besch. mit Kieselsäure 1 · ·×· · besch. mit Kieselsäure 2 · ·◊· · besch. mit Kieselsäure R972

Figur 1

EP 0 466 958 B1

# q/m Messung
## Ladungsretentionszeit

q/m µC/g

Standzeit/h

—— Rohtoner    —+— besch. mit Kieselsäure 3   --*-- besch. mit Kieselsäure 4

—□— besch. mit Kieselsäure 1   --×-- besch. mit Kieselsäure 2   —◊— besch. mit R972 Kieselsäure

Figur 2

EP 0 466 958 B1

33